# EUROPEAN PATENT SPECIFICATION

(11) **EP 2 729 547 B1**
(45) Date of publication and mention of the grant of the patent: **22.04.2015**
(21) Application number: 12738305.7
(22) Date of filing: 04.07.2012
(51) Int. Cl.: C09K 8/32, C09K 8/52, C09K 8/42, C04B 26/14, C09K 8/44, C09K 8/502

(54) **METHOD FOR DRILLING AND COMPLETION OPERATIONS WITH SETTABLE RESIN COMPOSITIONS**
VERFAHREN FÜR BOHR- UND ABSCHLUSSOPERATIONEN MIT HÄRTBAREN HARZZUSAMMENSETZUNGEN
PROCÉDÉ POUR OPÉRATIONS DE FORAGE ET DE COMPLÉTION À L'AIDE DE COMPOSITIONS DE RÉSINE POUVANT DURCIR

(30) Priority: 05.07.2011 US 201113176708
(43) Date of publication of application: 14.05.2014
(73) Proprietor: Halliburton Energy Services, Inc., Houston, TX 77072-5206 (US)
(72) Inventor: DEVILLE, Jay Paul, Spring, TX 77386 (US); GALINDO, Kay Ann, Montgomery Texas 77356 (US); PEREZ, Greg Paul, Pearland, TX 77581 (US)
(74) Representative: Cottrill, Emily Elizabeth Helen
(86) International application number: PCT/US2012/045475
(87) International publication number: WO 2013/006657

(56) References cited:
- EP-A1- 0 899 417
- US-A- 3 960 801
- US-A- 5 969 006
- US-B1- 6 328 106

## Description

### BACKGROUND OF THE INVENTION

### 1. Field of the Invention

The present invention relates to compositions and methods for drilling, cementing and casing boreholes in subterranean formations, particularly hydrocarbon bearing formations. More particularly, the present invention relates to cementing wellbores in narrow fracture gradient wells.

### 2. Description of Relevant Art

Global economic conditions require innovative and state-of-the art wellbore-stabilization methods to reduce the total cost associated with the construction and life cycle of a well. Stabilization includes preventing unwanted fluid or gas flow into or out of the wellbore, preventing the flow of particulates into the wellbore, and mitigating formation compressive or tensile failure.

Wellbore stability depends on the mechanical and chemical interaction between the wellbore fluids and the walls of the wellbore itself. A stable wellbore is essential during the drilling, completion, and production phases for maximizing the well's economic potential.

During drilling, wellbore instability can result from unintentional use of improper mud weights. Using mud weights that are too high can result in hydraulic fracturing of the formation and loss of drilling fluid into the formation. This problem can also occur during cementing when the hydrostatic pressure of long columns of cement exceeds the formation-fracturing pressure, potentially resulting in the total loss of cement slurry into the formation. Using mud weights that are too low can result in formation water and gas influx and in some cases the flow of unconsolidated particulates into the wellbore. This particulate flow can lead to hole enlargement and can make well completion difficult. Additionally, problems can arise during cementing that can lead to water/gas infiltration into the cement column. In severe cases, these fluids can migrate to the top of the cement column, resulting in inadequate or incomplete zonal isolation. Such fluid migration compromises the intent of the cementing operation and can lead to severe operating problems throughout the life of the well.

These problems are amplified in situations where a small window exists between the formation-fracture pressure and the pore pressure. In such narrow fracture gradient zones, maintaining proper mud weight for controlling formation fluid flow without fracturing the formation becomes difficult. As used herein, the term "fracture gradient" means the hydraulic pressure per unit depth required to be exerted in a subterranean stratum to cause fractures therein. As used herein, the term "narrow fracture gradient zone" shall be understood to be an area of a subterranean formation where the formation has a formation-fracture pressure and a pore pressure that differ by less than 1 lb/gal (120 kg/m³) in equivalent weight with respect to the narrow fracture gradient and less than 500 psi (34.0 atm) in other terms.

The Gulf of Mexico has experienced extreme difficulties with narrow fracture gradient problems, although such problems exist worldwide. In the Gulf of Mexico, narrow fracture gradient zones have been found less than 2,000 ft (610 m) below the mudline. Such "shallow-water-flow" (SWF) zones are formed from sand and silt that erodes from the Continental Shelf and settles over older deepwater formations. Over time, many layers formed as graded-sediment beds, with the heaviest particles settling to the bottom. The formation of successive layers undercompacted and overpressed the sediments. During drilling, penetration causes flow through the layers, creating a potential for casing wear, buckling, or collapse during drilling, cementing and production of the well. If SWF zones compromise wellbore stability, the entire well can be lost.

Typically, operators closely monitor drilling and cementing operations to combat various problems associated with SWF zones, and other types of narrow fracture gradient zones. The cementing operations focus on providing a competent seal between the cement and the formation, and between the cement and the casing, and on providing a competent sheath to last the life of the well. A principal challenge in slurry design is the small fracture-gradient/pore-pressure window. For example, the zone's fracture gradient may limit the slurry density to 12 lb/gal (1443 kg/m³)., while formation pore pressure can wash away a slurry with a density less than 11.5 lb/gal (1383 kg/m³).

In primary cementing operations, a string of pipe such as casing is cemented in a wellbore. A hydraulic cement composition is pumped into the annular space between the walls of the wellbore and the exterior of a string of pipe disposed therein. The cement composition is permitted to set in the annular space thereby forming an annular sheath of hardened substantially impermeable cement therein. The cement sheath physically supports and positions the pipe in the wellbore and bonds the pipe to the walls of the wellbore preventing undesirable migration of fluids between zones or formations penetrated by the wellbore.

In wells that penetrate formations with narrow fracture gradient zones, operators often employ light weight cement compositions such as cement foams in an effort to prevent the hydrostatic pressure exerted on the walls of the wellbore from exceeding the fracture gradient of the stratum. Operators may also decrease the permeabilities of such strata to prevent inflow or outflow of fluids into the wellbores by pumping cement or resin compositions into the stratum and allowing those compositions to harden in the stratum.

Another problem exacerbated in narrow fracture gradient zones is the incompatibility of cement with oil based drilling fluids. Oil based drilling fluids are normally used to drill swelling or sloughing shales, salt, gypsum, anhydrite or other evaporate formations, hydrogen sulfide-containing formations, and hot or high temperature (greater than about 300 degrees Fahrenheit ("° F", 149° C)) holes, and may be used in other holes penetrating a subterranean formation as well. Thus, oil based drilling fluids are commonly used in drilling through formations having narrow fracture gradient zones. Cement on the other hand is mixed and used as a water based slurry and thus is inherently incompatible with oil based drilling fluids. Consequently, spacers must be used to change the wettability of rock and casing from oil-wet to water-wet in wells drilled with oil-based drilling fluids prior to placing cement. Otherwise, poor bonding between the cement and casing and/or formation will occur when the casing/formation are not water-wet.

US 5969006 discloses methods of sealing openings in a well bore penetrating a subterranean zone into which fluids contained in the well bore are lost or from which fluids undesirably flow into the well bore. The methods basically comprise the steps of preparing a hardenable epoxy sealing composition comprising an epoxide containing liquid and a hardening agent, placing the epoxy sealing composition by way of the well bore into the openings and into the subterranean zone and allowing the epoxy composition to harden whereby the well bore is sealed.

EP 0899417 discloses that the properties of a subterranean stratum penetrated by a well bore may be modified, for example to increase the resistance of the stratum to shear failure, by pumping a hardenable epoxy composition having flexibility upon hardening and comprising an epoxide-containing liquid or an epoxy resin and an epoxide-containing liquid and a hardening agent, into the subterranean stratum by way of the well bore and by way of the porosity of the stratum, and allowing it to harden in the stratum.

US 6328106 discloses compositions and methods of using the compositions for sealing subterranean zones. One composition is comprised of water, an aqueous rubber latex, an organophilic clay, sodium carbonate, an epoxy resin and a hardening agent.

US 3960801 discloses an epoxy resin composition curable to a hard impermeable solid which contains a liquid aromatic diluent having the general formula C₆(R¹)₆ wherein R¹ is hydrogen; a straight or branched chain alkyl radical; a cycloparaffin radical, or a mixture thereof; wherein the alkyl and cycloparaffin radicals have within the range of about 1 to 10 carbon atoms; and further wherein at least one R¹ group is said alkyl or cycloparaffin radical.

There continues to be a need for compositions and methods for improved drilling and cementing operations through narrow gradient zones.

### SUMMARY OF THE INVENTION

The present invention provides improved methods of conducting completion operations through narrow fracture gradients in subterranean formations, following drilling with oil-based drilling fluids or muds. As used herein, the term "cementing" or "cementing operations" shall be generally understood to include operations for casing a borehole as well as operations for cementing a borehole unless stated otherwise. More particularly, the present invention provides a cement-alternative composition and method that allows for improved equivalent circulating density (ECD) control in narrow fracture gradient zones or wellbores and that is compatible with oil-based drilling fluids.

The present invention provides an epoxy-based resin system comprising an epoxy resin. Densities are controlled with added solids. According to the method of the invention, through a combination of solids of varying densities and particle sizes, resin density is adjusted to approximate that of the drilling fluid used in the drilling.

In all, the resin system of the present invention is highly tunable, with controllable density and rheology that is compatible with oil based drilling fluids. This compatibility reduces the need for spacers that commonly must be used when using cement in a well drilled with oil-based mud to render the surfaces touched by the oil-based mud water-wet.

### DETAILED DESCRIPTION OF PREFERRED EMBODIMENTS

The epoxy-based resin system used in well completion operations in the present invention comprises an epoxy resin. In one embodiment, the epoxy-based resin system also comprises an amine hardener and an amine accelerator. While various epoxide containing liquids can be used in making the resin composition, preferred such liquids are the diglycidyl ether of 1,4-butanediol, the diglycidyl ether of neopentylglycol, the diglycidyl ether of bisphenol A, and the diglycidyl ether of cyclohexanedimethanol. A suitable epoxide containing liquid comprised of the diglycidyl ether of 1,4-butanediol is commercially available from the Shell Chemical Company under the trade name "HELOXY®67." This epoxide containing liquid has a viscosity at 25°C in the range of from about 13 to about 18 centipoises (0.013 to 0.018 Pa·s), a molecular weight of 202 and a one gram equivalent of epoxide per about 120 to about 130 grams of the liquid. A suitable diglycidyl ether of neopentylglycol is commercially available from Shell Chemical Company under the trade name "HELOXY®68." This epoxide containing liquid has a viscosity at 25°C in the range of from about 13 to about 18 centipoises (0.013 to 0.018 Pa·s), a molecular weight of 216 and a one gram equivalent of epoxide per about 130 to about 140 grams of the liquid. A suitable diglycidyl ether of cyclohexanedimethanol is commercially available from Shell Chemical Company under the trade name "HELOXY®107." This epoxide containing liquid has a viscosity at 25°C in the range of from about 55 to about 75 centipoises(0.055 to 0.075 Pa·s), a molecular weight of 256 and a one gram equivalent of epoxide per about 155 to about 165 grams of the liquid. When an epoxide containing liquid or mixture is used as the only epoxide source in an epoxy-based resin composition of this invention, the epoxide containing liquid or mixture is generally present in an amount in the range of from about 20% to about 80% by weight of the epoxy composition, and preferably in an amount of about 50%.

A variety of hardening agents including, but not limited to, aliphatic amines, amide amines, amido amines, imidazoles, aliphatic tertiary amines, aromatic amines, cycloaliphatic amines, heterocyclic amines, polyamides, polyethylamines and carboxylic acid anhydrides can be used in the epoxy-based resin compositions of this invention containing the above described epoxide containing materials. Of these, aliphatic amines, aromatic amines and carboxylic acid anhydrides are the most suitable.

Examples of aliphatic and aromatic amine hardening agents are triethylenetetraamine, ethylenediamine, N-cocoalkyltrimethylenediamine, isophoronediamine, diethyltoluenediamine, and tris(dimethylaminomethylphenol). Examples of suitable carboxylic acid anhydrides are methyltetrahydrophthalic anhydride, hexahydrophthalic anhydride, maleic anhydride, polyazelaic polyanhydride and phthalic anhydride. Of these, triethylenetetraamine, ethylenediamine, N-cocoalkyltrimethylenediamine, isophoronediamine, diethyltoluenediamine and tris(dimethylaminomethylphenol) are preferred, with isophoronediamine, diethyltoluenediamine and tris(dimethylaminomethylphenol) being the most preferred. The hardening agent or agents used are included in the epoxy-based resin compositions of the present invention in an amount in the range of from about 20% to about 50% by weight of the compositions.

In one embodiment, the epoxy-based composition of the present invention comprises an amine accelerator such as diethyltoluenediamine for a non-limiting example. The epoxy-based composition of the invention may also include a particulate filler such as crystalline silicas, amorphous silicas, clays, calcium carbonate or barite. A commercial product, STEELSEAL®, resilient carbon based lost circulation material available from Halliburton Inc. in Duncan, Oklahoma and Houston, Texas might also be used as a filler in the present invention. When a filler is used, it is added to an epoxy composition of this invention in an amount in the range of from about 100% to about 300% by weight of the composition. An organosilane compound can optionally be included in the epoxy-based resin composition. The organosilane functions in the resin to impart high subterranean strata surface bond strengths to the compositions. The organosilane compound undergoes hydrolysis in the presence of trace quantities of water whereby trialkoxysilanols are formed which dehydrate and form strong bonds. That is, the dehydration results in the formation of bonds with silica in the strata. Suitable organosilane compounds include 3-aminopropyltrimethyoxysilane, 3-aminopropyltriethoxysilane, *N*-2-(aminoethyl)-3-ammopropyltriethoxysilane and 3-glycidoxy-propyltrimethoxysilane. Of these, 3-glycidoxypropyltrimethoxysilane is preferred. When used, the organosilane compound is included in an epoxy-based resin composition of this invention in an amount in the range of from about 0.1 % to about 5% by weight of the resin composition, preferably in an amount of about 0.5%.

Density of the epoxy-resin based composition is controlled with added solids. According to the method of the invention, through a combination of solids of varying densities and particle sizes, along with suspension agents, the resin density is adjusted to approximate that of the drilling fluid used in the drilling. Generally, smaller particles and higher volume percentages of solids cause increased or higher rheology. Larger particles contribute less to the rheology of the resins but are more prone to settling out at the cure temperature of the epoxy. Thus, a balance in the particles is obtained to reach the desired density. Non-limiting examples of solids that might be used for this purpose in the invention are silica flour, micronized sand, sand of several mesh sizes, barite, calcium carbonate, polystyrene beads, hematite, manganese tetroxide, graphite. Hollow glass spheres may also be used to lower density, even below the density of the neat resin. To aid in displacement, cement is often 0.5 to 1.0 lb/gal (120 kg/m³) heavier than the drilling fluid used. However, ideally, the rheology of the drilling fluid and cement or the drilling fluid and the resin of the invention will be the same.

An advantage of the present invention is the flexibility the epoxy-based resin composition of the invention affords to adjusting the density and rheology of the composition. This flexibility enables the composition to be used in completing wellbores penetrating narrow gradient zones with substantial reduction in or even elimination of the risk of fracturing the zone that would be associated with cementing the borehole with cement of the prior art. Another advantage of the present invention is its compatibility with oil based muds, so that in use, spacers or treatments of surfaces which the oil based muds have contacted to render them water wet may not be needed. As noted previously, prior art cement used in cementing is aqueous based and must have removal of traces of oil based mud for proper adhesion.

The present invention provides improved methods of conducting completion operations through narrow fracture gradients in subterranean formations, following drilling with oil-based drilling fluids.

The efficacy of the invention is demonstrated further by the following examples.

A base or neat epoxy resin composition was prepared comprising 100 grams of epoxy resin, in this example a diglycidyl ether of cyclohexanedimethanol, 28 grams of amine hardener, in this example diethyltoluenediamine, and 3.5 grams of amine accelerator, in this example 2,4,6 tridimethylaminomethylphenol. This base formulation (also called "neat resin" herein) had a density of 8.9 lb/gal (1070 kg/m³). To this base formulation, various solids were added to modify and adjust the density of the formulation, as indicated below in Table 1, to comprise different epoxy-resin based compositions of the invention.

**TABLE 1**

| Resin Compositions with Variable Density | | | | | |
|---|---|---|---|---|---|
| ***SAMPLE*** | **A** | **B** | **C** | **D** | **E** |
| Neat Resin, vol. % | 92 | 85 | 78 | 75 | 74 |
| Silica Flour (200 mesh), vol. % D₅₀ is about 75µm | --- | --- | 20 | 19 | 13 |
| Micronized sand, vol. % D₅₀ is about 10 µm | 8 | 15 | --- | --- | --- |
| Barite, vol. % | --- | --- | 2 | 6 | 13 |
| Polyamide resin suspension agent, lb/bbl (kg/m³) | 2 (5.7) | 2 (5.7) | 2 (5.7) | 2 (5.7) | 2 (5.7) |
| | | | | | |
| Fluid Density, lb/gal (kg/m³) | 10.0 | 11.0 | 12.1 | 13.0 | 14.1 |
| | 1202 | 1322 | 1455 | 1563 | 1695 |

Each of the formulations in Table 1 used different combinations of solid particles to achieve desired resin densities. At the same time these formulations showed minimal observable settling and maintained reasonable, "mud-like" or drilling fluid type rheology, as indicated in Table 2 below. Table 2 also provides the experimentally determined compressive strength for each sample. Compressive strength is a measure of the strength of the cured material and was measured after the sample was cured in a cube mold for 24 hours at 160°F (71° C). A compressive strength of greater than about 500 psi (34.0 atm) is considered acceptable for the purposes of this invention.

**TABLE 2**

| Fann 35 Rheology at 120°F (49° C) and Compressive Strength of Resin Compositions | | | | | | |
|---|---|---|---|---|---|---|
| ***SAMPLE*** | **Neat** | **A** | **B** | **C** | **D** | **E** |
| 600 rpm | 83 | 158 | 291 | 159 | 198 | 201 |
| 300 rpm | 41 | 82 | 104 | 83 | 102 | 104 |
| 200 rpm | 26 | 56 | 70 | 56 | 69 | 71 |
| 100 rpm | 11 | 30 | 36 | 30 | 35 | 37 |
| 6 rpm | 2 | 3 | 3 | 4 | 3 | 3 |
| 3 rpm | 1 | 2 | 2 | 3 | 2 | 2 |
| Plastic Viscosity, cP (Pa·s) | 42 | 76 | 100 | 76 | 96 | 97 |
| | 0.042 | 0.076 | 0.1 | 0.076 | 0.096 | 0.097 |
| Yield Point, lb/100 ft² (kg/m²) | 0 | 6 | 4 | 7 | 6 | 7 |
| | 0 | 0.30 | 0.20 | 0.34 | 0.30 | 0.34 |
| | | | | | | |
| Compressive Strength, psi (atm) | >3750 | >3750 | >3750 | >3750 | >3750 | >3750 |
| | >255 | >255 | >255 | >255 | >255 | >255 |

The results in Table 2 show that settable compositions of high compressive strength are able to be prepared with controlled density and rheology, and consequent ECD advantages, according to the present invention. These results are examples and by no means represent the only acceptable compositions that may be formulated according to the invention.

Further examples demonstrate the compatibility of the compositions of the invention with oil based drilling fluids (OBM) and the consequent potential of the compositions to accomplish enhanced bonding.

A base or neat epoxy resin composition was prepared as discussed above (see Table 1) and then contaminated with oil based drilling fluid and cured at 160°F (71° C) for 24 hours in a cube mold. Results for the mud compatibility testing are given in Table 3.

**TABLE 3**

| Compatibility of Resin Systems with OBM | | | | |
|---|---|---|---|---|
| ***SAMPLE*** | **F** | **G** | **H** | **I** |
| Neat Resin, vol. % | 67.5 | 65 | 68 | 50 |
| Silica Flour (200 mesh), vol. % D₅₀ is about 75µm | 27.5 | 25 | 12 | 20 |
| ENCORE® 14 lb/gal (1683 kg/m³). OBM, vol. % Available from Halliburton Energy Services, Inc. In Duncan, OK and Houston, TX | 5 | 10 | 20 | 30 |
| Polyamide resin suspension agent, lb/bbl (kg/m³) | 2 (5.7) | 2 (5.7) | 2 (5.7) | 2 (5.7) |
| | | | | |
| Compressive Strength | > 3750 | > 3750 | > 3750 | 1750 |

Table 3 demonstrates that even at 30% by volume drilling mud contamination, the epoxy-based resin compositions of the invention maintained an acceptable compressive strength. In the samples with substantial mud (20% and 30%), some degree of separation was observed between the mud and the resin formulation. However, despite this separation, the cured cube was solid with no liquid component remaining. The separation then only resulted in a visual distinction between layers of the cured cube.

## Claims

1. A method for conducting drilling and completion operations in a borehole for the recovery of hydrocarbons in a subterranean formation,
wherein the subterranean formation has one or more narrow fracture gradient zones, wherein the narrow fracture gradient zones are areas of the subterranean formation where the formation has a formation-fracture pressure and a pore pressure that differ by less than 1 lb/gal (120 kg/m³) in equivalent weight and the method comprises the steps of:
drilling the borehole in the subterranean formation using an oil based drilling fluid having a known rheology and density, at least in drilling through one or more of the narrow fracture gradient zones of the formation;
providing a resin composition having a rheology and a density approximating that of the oil-based drilling fluid;
using the resin composition instead of cement in the completion operation without fracturing the narrow gradient zones; and
allowing the resin composition to harden in place in the borehole.

2. The method of claim 1 wherein the completion operation
(a) is cementing the borehole;
(b) is casing the borehole; or
(c) comprises isolating or consolidating a narrow gradient zone in the formation.

3. The method of claim 1 wherein the resin composition is formulated with a density approximating that of the oil based drilling fluid by adding solid particles to the composition.

4. The method of claim 3 wherein the resin composition comprises a suspension agent for suspending said particles.

5. The method of claim 1 wherein the resin composition comprises an epoxy resin, a hardener, and an accelerator.

6. The method of claim 5 wherein the hardener and accelerator are amines.

7. The method of claim 5 wherein the composition further comprises a suspension agent, and optionally the suspension agent is a polyamide resin.

8. The method of claim 5 wherein the resin composition comprises an epoxy resin, an amine hardener, an amine accelerator, a polyamide resin suspension agent, and solid particles that give the fluid a density approximating that of the oil based drilling fluid.

9. The method of claim 3 wherein the particles are selected from particles ranging in size from 5 µm to 100 µm.

10. The method of claim 3 wherein the particles comprise glass spheres and the density of the resin is less than 8.9 lb/gal (1070 kg/m³).

11. The method of claim 1 wherein the hardened resin composition has a compressive strength greater than 500 psi (34.0 atm).

12. The method of claim 1 wherein spacers are not needed in the borehole after drilling with the drilling fluid and before use of the resin composition in the borehole completion operation.

13. The method of claim 1 wherein the density of the resin composition and the density of the drilling fluid differ by less than 1.5 lb/gal (180 kg/m³).

14. The method of claim 1 wherein the equivalent circulating density of the resin composition and the equivalent circulating density of the drilling fluid differ by less than 1.5 lb/gal (180 kg/m³).

15. The method of claim 1 wherein the resin composition comprises an epoxide containing liquids selected from the group consisting of: diglycidyl ether of 1,4-butanediol; diglycidyl ether of neopentylglycol; diglycidyl ether of bisphenol A; and diglycidyl ether of cyclohexanedimethanol.

## Patentansprüche

1. Verfahren zum Ausführen von Bohr- und Abschlussoperationen in einem Bohrloch für die Gewinnung von Kohlenwasserstoffen in einer unterirdischen Formation,
wobei die unterirdische Formation eine oder mehrere schmale Bruchgradientenzonen aufweist, wobei die schmalen Bruchgradientenzonen Bereiche der unterirdischen Formation sind, wo die Formation einen Formation-Bruchdruck und einen Porendruck aufweist, die sich um weniger als 1 lb/gal (120 kg/m³) im Äquivalentgewicht unterscheiden, und das Verfahren die folgenden Schritte beinhaltet:
Bohren des Bohrlochs in der unterirdischen Formation unter Verwendung einer ölbasierten Bohrflüssigkeit mit einer bekannten Rheologie und Dichte, mindestens im Bohren durch eine oder mehrere der schmalen Bruchgradientenzonen der Formation;
Bereitstellen einer Harzzusammensetzung mit einer Rheologie und Dichte, die sich der der ölbasierten Bohrflüssigkeit annähern;
Verwenden der Harzzusammensetzung anstatt von Zement in der Abschlussoperation, ohne Brechen der schmalen Gradientenzonen; und
Aushärten lassen der Harzzusammensetzung im Bohrloch.

2. Verfahren gemäß Anspruch 1, wobei die Abschlussoperation
(a) Zementieren des Bohrlochs ist;
(b) Verschalen des Bohrlochs ist; oder
(c) das Isolieren oder Festigen einer schmalen Gradientenzone in der Formation beinhaltet.

3. Verfahren gemäß Anspruch 1, wobei die Harzzusammensetzung durch Hinzufügen von festen Partikeln zur Zusammensetzung mit einer Dichte formuliert wird, die sich der der ölbasierten Bohrflüssigkeit annähert.

4. Verfahren gemäß Anspruch 3, wobei die Harzzusammensetzung ein Suspensionsmittel zum Suspendieren der Partikel beinhaltet.

5. Verfahren gemäß Anspruch 1, wobei die Harzzusammensetzung ein Epoxidharz, einen Härter und einen Beschleuniger beinhaltet.

6. Verfahren gemäß Anspruch 5, wobei der Härter und Beschleuniger Amine sind.

7. Verfahren gemäß Anspruch 5, wobei die Zusammensetzung ferner ein Suspensionsmittel beinhaltet und das Suspensionsmittel optional ein Polyamidharz ist.

8. Verfahren gemäß Anspruch 5, wobei die Harzzusammensetzung ein Epoxidharz, einen Aminhärter, einen Aminbeschleuniger, ein Polyamidharz-Suspensionsmittel und feste Partikel, die der Flüssigkeit eine Dichte verleihen, die sich der der ölbasierten Bohrflüssigkeit annähert, beinhaltet.

9. Verfahren gemäß Anspruch 3, wobei die Partikel ausgewählt sind aus Partikeln, die in Größe von 5 µm bis 100 µm reichen.

10. Verfahren gemäß Anspruch 3, wobei die Partikel Glaskugeln beinhalten und die Dichte des Harzes weniger als 8,9 lb/gal (1070 kg/m³) ist.

11. Verfahren gemäß Anspruch 1, wobei die gehärtete Harzzusammensetzung eine Druckfestigkeit größer als 500 psi (34,0 atm) aufweist.

12. Verfahren gemäß Anspruch 1, wobei im Bohrloch nach Bohren mit der Bohrflüssigkeit und vor Verwendung der Harzzusammensetzung in der Bohrloch-Abschlussoperation Abstandshalter nicht benötigt werden.

13. Verfahren gemäß Anspruch 1, wobei sich die Dichte der Harzzusammensetzung und die Dichte der Bohrflüssigkeit um weniger als 1,5 lb/gal (180 kg/m³) unterscheiden.

14. Verfahren gemäß Anspruch 1, wobei sich die äquivalente zirkulierende Dichte der Harzzusammensetzung und die äquivalente zirkulierende Dichte der Bohrflüssigkeit um weniger als 1,5 lb/gal (180 kg/m³) unterscheiden.

15. Verfahren gemäß Anspruch 1, wobei die Harzzusammensetzung ein Epoxid beinhaltet, das Flüssigkeiten enthält, ausgewählt aus der Gruppe bestehend aus: Diglycidylether von 1,4-Butandiol; Diglycidylether von Neopentylglycol; Diglycidylether von Bisphenol A; und Diglycidylether von Cyclohexandimethanol.

## Revendications

1. Procédé pour la mise en oeuvre d'opérations de forage et de complétion dans un trou de forage pour la récupération d'hydrocarbures dans une formation souterraine,
dans lequel la formation souterraine a une ou plusieurs zones à faible gradient de fracture, les zones à faible gradient de fracture étant des zones de la formation souterraine où la formation a une pression de fracturation de formation et une pression interstitielle qui diffèrent de moins de 1 lb/gal (120 kg/m³) en termes de poids équivalent et le procédé comprenant les étapes consistant à :
forer le trou de forage dans la formation souterraine à l'aide d'un fluide de forage à base d'huile ayant une rhéologie et une masse volumique connues, au moins en forant à travers une ou plusieurs des zones à faible gradient de fracture de la formation ;
obtenir une composition de résine ayant une rhéologie et une masse volumique se rapprochant de celles du fluide de forage à base d'huile ;
utiliser la composition de résine à la place de ciment dans l'opération de complétion sans fracturation des zones à faible gradient ; et
laisser la composition de résine durcir sur place dans le trou de forage.

2. Procédé selon la revendication 1 dans lequel l'opération de complétion
(a) est la cimentation du trou de forage ;
(b) est le tubage du trou de forage ; ou
(c) comprend l'isolement ou la consolidation d'une zone à faible gradient dans la formation.

3. Procédé selon la revendication 1 dans lequel la composition de résine est formulée avec une masse volumique se rapprochant de celle du fluide de forage à base d'huile par ajout de particules solides à la composition.

4. Procédé selon la revendication 3 dans lequel la composition de résine comprend un agent de suspension pour la mise en suspension desdites particules.

5. Procédé selon la revendication 1 dans lequel la composition de résine comprend une résine époxyde, un durcisseur et un accélérateur.

6. Procédé selon la revendication 5 dans lequel le durcisseur et l'accélérateur sont des amines.

7. Procédé selon la revendication 5 dans lequel la composition comprend en outre un agent de suspension, et facultativement l'agent de suspension est une résine de polyamide.

8. Procédé selon la revendication 5 dans lequel la composition de résine comprend une résine époxyde, un durcisseur amine, un accélérateur amine, un agent de suspension résine de polyamide et des particules solides qui donnent au fluide une masse volumique se rapprochant de celle du fluide de forage à base d'huile.

9. Procédé selon la revendication 3 dans lequel les particules sont choisies parmi les particules dont la taille va de 5 µm à 100 µm.

10. Procédé selon la revendication 3 dans lequel les particules comprennent des billes de verre et la masse volumique de la résine est inférieure à 8,9 lb/gal (1070 kg/m³).

11. Procédé selon la revendication 1 dans lequel la composition de résine durcie a une résistance à la compression supérieure à 500 psi (34,0 atm).

12. Procédé selon la revendication 1 dans lequel des tampons ne sont pas nécessaires dans le trou de forage après forage avec le fluide de forage et avant utilisation de la composition de résine dans l'opération de complétion de trou de forage.

13. Procédé selon la revendication 1 dans lequel la masse volumique de la composition de résine et la masse volumique du fluide de forage diffèrent de moins de 1,5 lb/gal (180 kg/m³).

14. Procédé selon la revendication 1 dans lequel la masse volumique équivalente en circulation de la composition de résine et la masse volumique équivalente en circulation du fluide de forage diffèrent de moins de 1,5 lb/gal (180 kg/m³).

15. Procédé selon la revendication 1 dans lequel la composition de résine comprend des liquides contenant des groupes époxydes choisis dans le groupe constitué par : l'éther de diglycidyle du 1,4-butanediol ; l'éther de diglycidyle du néopentylglycol ; l'éther de diglycidyle du bisphénol A ; et l'éther de diglycidyle du cyclohexanediméthanol.
